# EUROPEAN PATENT APPLICATION

(11) **EP 4 844 343 A1**
(43) Date of publication of application: **25.11.2026**
(21) Application number: 25177628.2
(22) Date of filing: 20.05.2025
(51) Int. Cl.: G01D 5/14, F16H 59/10

(54) **SYSTEM AND METHOD FOR DETERMINING ELEMENT POSITION**

(71) Applicant: Melexis Technologies SA, 2022 Bevaix (CH)
(72) Inventor: FESTJENS, Martijn, 3980 Tessenderlo-Ham (BE)
(74) Representative: Winger

(57) **Abstract**

A magnetic sensor system is used to detect a position of a mobile element (e.g. a user interface element) being moveable relative to a stationary component. The system comprises:
- a plurality of magnetic sensors, each sensor being configured to measure magnetic field components generated by a magnetic source; where the sensor and the source are moveable relative to the other,
- a processing unit including a trained machine learning model, the processing unit being configured to assign a current relative position of the mobile element to one of a plurality of predefined discrete positions of the mobile element with respect to the static component based on the magnetic components provided by the plurality of sensors.

## Description

### Field of the invention

The present invention relates to the field of sensor technologies, and more specifically to magnetic sensor systems, and application thereof in position sensing.

### Background of the invention

Control systems incorporating position sensing mechanisms are extensively used in various applications ranging from industrial equipment to consumer electronics as well as in land, railed, aircraft and space vehicle interfaces. Control levers, knobs, and joysticks represent common user interface elements that enable operators to input commands by adjusting their position and/or twist.

Position sensing for user interface elements presents several technical challenges. Position detection methods often rely on switches, potentiometers, or contactless encoders to determine the position and/or the twist of the user interface element. These approaches frequently involve numerous components that increase system complexity, manufacturing costs, and potential failure points.

In many exigent applications, such as in automotive and aircraft applications, user interface elements are configured as control levers being designed to move along multiple axes or positions, each corresponding to different commands or functions. Accurately position and/or rotation determination along such multiple axes is technically challenging, as environmental factors such as temperature variations, vibration, and aging can affect the reliability of position detection systems.

Commercial and industrial applications require a high level of control of an increasingly larger number of parameters in while keeping the control setup sufficiently compact. For example, in automotive industry, a high number of parameters need to be controlled in a limited space, which are also susceptible to environmental noise.

Magnetic sensing technologies have emerged in position detection applications due to their non-contact nature and resistance to environmental factors. However, interpreting magnetic field measurements to determine accurate position can become technically complex and expensive, particularly when the control element can move along and/or rotate around multiple axes, notably in vehicular, aircraft and space applications, wherein robust and reliable determination are essential for vehicle operation and safety. The detection systems must operate consistently across thousands of operation cycles and various environmental conditions. Moreover, open space constraints in modern equipment and vehicles add another layer of difficulty, as position detection systems must often fit within increasingly compact housings while maintaining performance and reliability

Challenges remain in developing position detection systems that can accurately determine positions of user interface elements enabling additional input functionality, all while reducing system complexity, component count, and maintaining reliability across varying operational conditions, notably for special applications for land, railed, aircraft and space vehicles.

### Summary of the invention

It is an object of embodiments of the present invention to provide a technically- and cost-efficient solution for detecting a position of an user interface element, by means of a magnetic source for applications operating with discrete positions, such as semi-automatic transmission control systems employing position sensing mechanisms to detect gear selection operated by the pilot. This objective is accomplished by the aspects of the present invention.

In a first aspect, a magnetic sensor system is used to detect a position of a mobile element (e.g. a user interface element) being moveable relative to a stationary component. The system comprises:
- a plurality of magnetic sensors, each sensor being configured to measure magnetic field components generated by a magnetic source; where the sensor and the source are moveable relative to the other,
- a processing unit including a trained machine learning model, the processing unit being configured to assign a current relative position of the mobile element to one of a plurality of predefined discrete positions of the mobile element with respect to the static component based on the magnetic components provided by the plurality of sensors.

It is an advantage that the trained model can be applied easily to a system, and allows an accurate detection with a small circuit footprint, allowing a compact setup.

In some embodiments of the present invention, the processing unit is configured to assign the current relative position to one of a plurality of predefined discrete positions being indexed discrete positions. These can be easily provided as a simple digital output to a different system (e.g. a display or the like).

In some embodiments, the predefined discrete positions comprise a set of less than 100 discrete positions, preferably less than 20 discrete positions. The training can be done easily, with reliable results.

In some embodiments, the predefined discrete positions are higher in number than the magnetic sensors. This allows an inexpensive and compact setup, with an accurate output of the position thanks to the trained model.

In some embodiments of the present invention, the predefined discrete positions are indexed relative to a reference volume, plane or line of the stationary component, preferably wherein the discrete positions are indexed relative to a reference plane further wherein the magnetic sensors lying on a plane substantially parallel to the reference plane. This allows an intuitive input.

In some embodiments of the present invention, the trained machine learning model comprises a neuronal network having an input layer for aquiring numerical data corresponding to or representing the measured magnetic components provided by the plurality of the magnetic sensors, preferably one or more hidden layers, and an output layer having nodes for indicating the discrete position being associated with the current position of the mobile element. The neural network allows a cost-effective and accurate position detection for most consumer applications including vehicle applications.

In some embodiments of the present invention, the processing unit is further configured to select one sensor of the plurality of magnetic sensors based on the current position of the mobile element, and determine an angular position and/or an axial position of the mobile element relative to the stationary component based on magnetic field components provided uniquely by said selected magnetic sensor; preferably the processing unit being configured to select said the magnetic sensor based on the discrete position to which the current position of the mobile element has been assigned; preferably the processing unit being configured to determine the angular position of the magnetic source based on the current position and/or assigned predefined position of the mobile element. It is an advantage of embodiments of the present invention that simple processing can be provided, thus allowing integration of discrete positioning and rotation, optimizing computational resources.

In some embodiments of the present invention, the mobile element is a control lever having a mobile extremity being moveable with respect to the stationary component. The control lever is actuable by a user and/or a mechanical device. The magnetic source or the plurality of magnetic sensors is fixed on said mobile extremity of the control lever, in other words, the magnetic source or the sensors move in solidarity with the mobile element where the other of the two is stationary relative to the mobile element.

In particular, the system may include an indexing mechanical arrangement for a reference plane configured to limit some movements and/or positions of the mobile extremity of the control lever with respect to the stationary component.

In some embodiments of the present invention, the control lever is a gear lever for a manual or semi-automatic transmission of a vehicle. The discrete positions are divided in subsets. A first subset of the discrete positions represents a distinct selected gear. A second subset of the discrete positions represents a neutral position between gears. The processing unit is configured to provide an output indicating the selected gear or the neutral position based on the predefined discrete position to which the current position of the gear lever has been assigned.

It is an advantage of embodiments of the present invention that the joystick position can be accurately determined using pattern recognition with easy implementation.

In a further aspect, the present invention provides a method for detecting a position of a mobile element being moveable with respect to a stationary component, for example using a system as in embodiments of the first aspect. The method comprises:
- providing one of a magnetic source and a plurality of magnetic sensors to the mobile element and the other of the magnetic source and the plurality of magnetic sensors to the stationary component;
- measuring magnetic field components (Bx, By, Bz) generated by the magnetic source at a plurality of measurement positions by means of the plurality of magnetic sensors;
- assigning a current position of the mobile element to one of a plurality of predefined discrete positions of the the mobile element with respect to the static component by processing the measured magnetic field components using a trained machine learning model.

In some embodiments of the present invention, three linearly independent components of the magnetic field are measured at each of the plurality of measurement positions, preferably by means of the same magnetic sensor. This allows enough data for the input of the model to improve the determination of the position.

In some embodiments of the present invention, each of the plurality of discrete positions is indexed; and/or wherein the predefined discrete positions comprise a set of less than 100 discrete positions, preferably less than 20 discrete positions; and/or wherein the predefined discrete positions are higher in number than the magnetic sensors.

In some embodiments of the present invention, the method further comprises:
- selecting one of the plurality of measurement positions and/or one of the magnetic sensor (201) based on the current position of the mobile element, preferably based on the predefined discrete position to which the current position of the mobile element has been assigned, and
- determining a rotational position and/or an axial position of the mobile element based on magnetic field components measured at said selected position and/or provided by said selected magnetic sensor.

It is an advantage of embodiments of the present invention that training of a machine learning algorithm can be adapted to the specific positioning required by the particular application, and the implementation can be done easily.

In some embodiments of the present invention, the mobile element is a control lever, notably a gear lever, for operating a manual or semi-automatic transmission of a vehicle; and wherein each of a first subset of the discrete positions represents a distinct selectable gear, and wherein each of a second subset of the discrete positions represents a neutral position between gears; the method comprising indicating a selected gear or a neutral position of the gear lever based on the predefined discrete position to which the current position of the control lever or gear lever has been assigned.

In some embodiments of the present invention, the method further comprises
- defining a plurality of predefined application-dependant discrete positions of the mobile element with respect to the static component; and
- mapping the assigned discrete position to one of said plurality of predefined application-dependant discrete positions.

In a further aspect, the present invention provides a computer-readable medium storing instructions that, when executed by a processor, cause the processor to perform the method of the previous aspect.

### Brief description of the drawings

FIG 1 is a schematic representation of a magnetic sensor system and a processor according to embodiments of the present invention.
FIG 2 is a schematic view of a magnetic sensor system including four magnetic pixels according to embodiments of the present invention.
FIG 3 is a schematic representation of an exemplary set of discrete positions for a control lever according to embodiments of the present invention.
FIG 4 is a schematic diagram of a neural network with input, hidden, and output layers according to embodiments of the present invention.
FIG 5a is a graphical representation of output signals from a single magnetic pixel for a magnetic source according to embodiments of the present invention.
FIG 5b is a schematic representation of a magnetic sensor system with a control lever in a position which provides the output signals of FIG 5a.
FIG 6a is a graphical representation of output signals from a magnetic pixel after a 10-degree rotation of the magnetic source according to embodiments of the present invention.
FIG 6b is a schematic representation of a magnetic sensor system with a control lever in a position which provides the output signals of FIG 6a.
FIG 7 is a schematic representation of a system including a control lever in accordance with embodiments of the present invention.
FIG 8a shows an exemplary gear shifter icon for e.g. a vehicle.
FIG 8b shows a reference plane, which maps discrete positions of the icon in the previous FIG 8a.
FIG 8c shows a table listing the discrete positions and corresponding gears.
FIG 9 is a schematic representation of a prototype gearbox with discrete positions and transient positions according to embodiments of the present invention.
FIG 10a and FIG 10b shows other exemplary gear arrangements.

The drawings are only schematic and are non-limiting. In the drawings, the size of some of the elements may be exaggerated and not drawn on scale for illustrative purposes. Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The following terms are provided solely to aid in the understanding of the invention.

As used herein, and unless otherwise specified, the term "magnetic sensor system" is understood as an organized collection of components configured to detect and process magnetic field information originating from a magnetic source, and to generate a corresponding output indicating one or more positions of said source. Examples of such a "magnetic sensor system" include any assembly containing multiple magnetic sensors, a data-processing module such as a microcontroller or processor executing a trained machine learning model, and optional user or mechanical interfaces that use outputs from the system.

As used herein, and unless otherwise specified, the term "magnetic source" is understood as any magnetized body or object that can generate a magnetic field detectable by one or more magnetic sensors. Examples of a "magnetic source" include permanent magnets such as neodymium or ferrite magnets, electromagnets, or any component integrated with ferromagnetic materials that reliably produce a measurable magnetic field.

As used herein, and unless otherwise specified, the term "magnetic sensor" is understood as a device capable of measuring one or more components of a magnetic field and producing signals representative of those measurements. Examples of specific embodiments of "magnetic sensor" include Hall-effect sensors, magnetoresistive sensors, or other sensors that detect changes in magnetic flux density along one or multiple axes.

As used herein, and unless otherwise specified, the phrase "measuring magnetic field components" is understood as detecting numerical values representative of at least one, and preferably three linearly independent axes, of the magnetic field vector generated by a magnetic source. Examples of "measuring magnetic field components" include measuring the X, Y, and Z components of the magnetic field or any subset of these components, suitable for determining the position of the source.

As used herein, and unless otherwise specified, the term "processing unit" is understood as an electronic or computational device configured to receive signals from the magnetic sensors and to execute algorithms, including a trained machine learning model, for assigning discrete positions to the magnetic source. Examples of a "processing unit" include microcontrollers, microprocessors, dedicated integrated circuits, or computing systems with specialized software.

As used herein, and unless otherwise specified, the term "discrete position" indicates any reference indicating a distinct, countable position, notably representing a predefined space in a given dimensional space (e.g. one-dimensional, bi-dimensional, 3-dimensional or pluri-dimensional position space), at the contrary of the "continuous position" (often simply indicated as "position") that is a measurable position that can have any value within a measuring range (e.g. the given dimensional space) according to the limits provided by the measurement and/or of the digitalization (i.e. digital representation of the position). At the contrary of the continuous position, the discrete position can be validly represented by an (e.g. alphabetical, numerical, alphanumerical) index, e.g. an unmeasurable or incalculable digital reference.

With "trained machine learning model" it is understood any computational model, created using a machine learning training process such as supervised or unsupervised learning, that can map inputs (e.g., values of measured magnetic field components in embodiments of the present invention) to a required output (e.g., selecting the corresponding discrete position of the mobile element). Examples of a "trained machine learning model" include deep neural networks, support vector machines, decision trees, or any other model capable of pattern recognition in magnetic field data. Although in the description of the present invention multi-layer Neuronal Network ("NN") has been used, the present invention is not limited thereto, and other models such as recurrent Neuronal Networks with long short-term memory ("LSTM") cells, gradient boosting decision tree models, dynamic sensor fusion algorithms, and other machine learning models can be also applied.

As used herein, and unless otherwise specified, the term "control lever" is clarified to mean a mechanical lever having a movable extremity that a user or mechanical device can be actuated to change the position of or input commands to a system. The mobile extremity may be the end portion of the control lever, and can be displaced relative to a fixed reference or pivot point. In embodiments of the present invention, the source of the magnetic field may be attached or integrated to the control level at an appropriate location.

Examples of a "control lever" include a gear lever in a vehicle, a joystick in an industrial machine, or for operating aircrafts or farm vehicles, or any pivotable handle used to input mechanical or electronic commands. Examples of "mobile extremity" include the handle of a gear lever that can move in multiple directions or the tip of a joystick in a control console.

The control lever may comprise a spherical joint for movable-mount the lever to a body, for example a body on which magnetic sensors are fixed, the present invention not being limited thereto. The joint may comprise a rotational joint or ball joint that connects the lever to a stationary base or housing, allowing pivoting or angular movement in multiple directions. Examples of a "spherical joint" include a ball-and-socket joint on gear levers, joystick pivot assemblies, or universal joints in mechanical linkages.

In some embodiments of the present invention the control lever is specifically intended for selecting gears, neutral positions, or drive modes in a vehicle setup, either requiring a clutch arrangement (manual), partial- or full-automation (semi-, full-automatic), etc. Examples include gear levers in cars, motorcycles, or trucks with layout patterns determined by the transmission type. The detected position can be used to operate essential functions, e.g. gear change, notably in semi- or full-automatic transmission control systems employing position sensing mechanisms to detect gear selection operated by the pilot. Alternatively or complementarily, the detected position can be used to operate and/or support secondary functions, such as vehicle monitoring, energy/fuel consumption and (predictive) maintenance functions, as well as vehicle entertainments, displaying, and/or multimedia-related functions.

A computer-readable medium is any non-transitory data storage medium that can retain software or firmware code capable of directing a processor to execute a described measurement and classification steps of the present invention. Examples of such a "computer-readable medium" include a flash memory chip, a hard disk, an optical disc, or any memory device that stores machine-executable instructions.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a magnetic sensor system including processing means for detecting a position of a mobile element, notably being a user interface element or control lever, such as a gear lever or gear stick (the present invention not being limited thereto), being moveable relative to a stationary component.The system includes magnetic sensors and a magnetic source, one of the magnetic source and the plurality of magnetic sensors being provided to the mobile element, the other one being provided to the stationary component, so motions of the movable element cause relative movement between the sensors and the magnetic source. The position of the mobile element is obtained from the measurements of the magnetic sensors, which are processed by a processing unit included in the system. The processing unit includes a trained machine learning model. The input of the model are the measurements provided by the magnetic sensors, while the output corresponds with the position of the element. Details thereof are described further below.

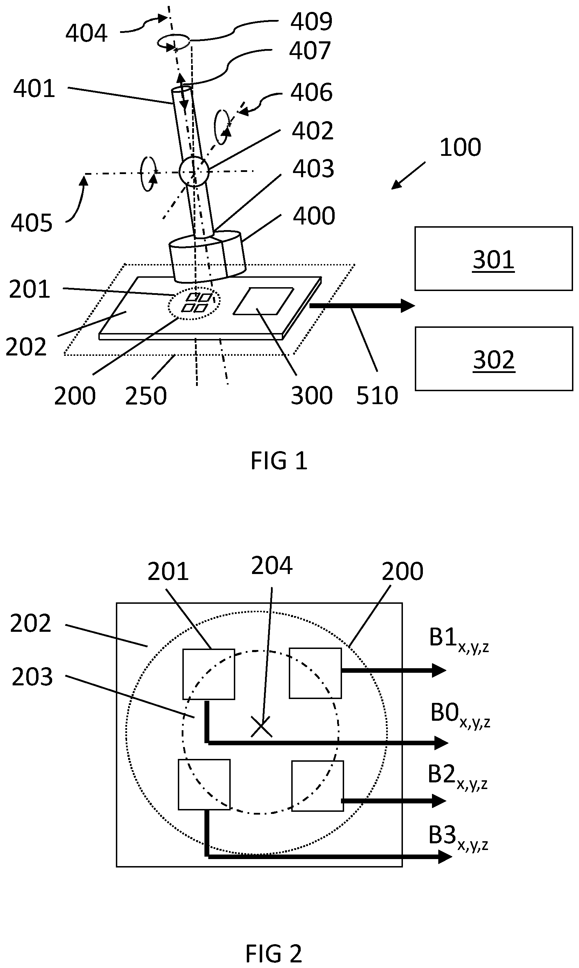

Examples of the system are schematically shown in FIG 1 to FIG 4. The magnetic sensor system (100) comprises a plurality of magnetic sensors (200), each being configured to measure magnetic field components generated by a magnetic source (400) being fixed on a mobile element moveable with respect to a stationary component (250) which support the magnetic sensors (200), the present invention not being limited thereto. In the illustrated embodiment, the magnetic source is a two-pole magnet.

The system comprises a processing unit (300), that includes a trained machine learning model (310), for determining a position, in this case a discrete position, related to the current position of the mobile element. The discrete position is one from a plurality of predefined discrete positions (500) of the mobile element with respect to the stationary component. The processing unit (300) is configured to assign one of these predefined discrete positions to the current position of the mobile element (400), based on the magnetic components provided (measured) by the plurality of magnetic sensors (200).

In some embodiments, some or all the predefined discrete positions (500) of the mobile element with respect to the static component can represent (e.g. correspond to) predefined discrete position of the magnetic source (400) with respect to the plurality of magnetic sensors (200).

The mobile element (401), or control lever, is rotatably mounted relative to the magnetic sensors that are fixed to the stationary component (250) so as to provide a rotation of the mobile element along at least one rotational axis, preferably around more rotational axes (405,406), being orthogonal to the longitudinal axis (404) of the mobile element, e.g. via a rotary or pivot joint (402). In some embodiments of the present invention, the control lever can to move in the three directions of space, for example in orthogonal directions given by rotational axes, and even up and down along the longitudincal axis. The mobile element can be configured to provide an additional rotation or "twist" around the longitudinal axis (404), so an angular position (409) can be defined. Additionally or alternatively, the mobile element can be configured to provide an axial movement ("push") (407) along the longitudinal axis (404) of the mobile element.

The plurality of magnetic sensors (200) may be provided on a substrate, for example including one or more magnetic sensing elements integrated on a semiconductor substrate or on any other suitable support. The plurality of magnetic sensors (200) may be provided on the semiconductor substrate, notably as a single integrated circuit (chip). The processing circuit (300) may be provided as a chip, on a semiconductor substrate connected or connectable to the magnetic sensors. In some embodiments, the same platform integrates the plurality of magnetic sensors (200) and the processing unit (300), thus achieving a highly compact device.

Referring to FIG 2, the figure shows a magnetic sensor system (100) including four magnetic sensors (200), also referred to as magnetic pixels. Preferably, each magnetic sensor (200) is a 3D sensor capable of measuring magnetic field components in three orthogonal directions (X, Y, Z). Advantageously, the four magnetic sensors (200) are arranged in a coplanar configuration on a plane providing magnetic sensing at four distinct positions. The magnetic sensors (200) are positioned to detect the magnetic field components generated by a magnetic source (400) that is attached to a mobile extremity (403) or portion of the mobile element, such as a control lever. Typically, the distance ("air gap") between the magnetic sensors and the magnetic source is in the range of few-some millimetres, e.g. an air gap from 1 up to 10 mm depending on the magnetic arrangement and on the application.

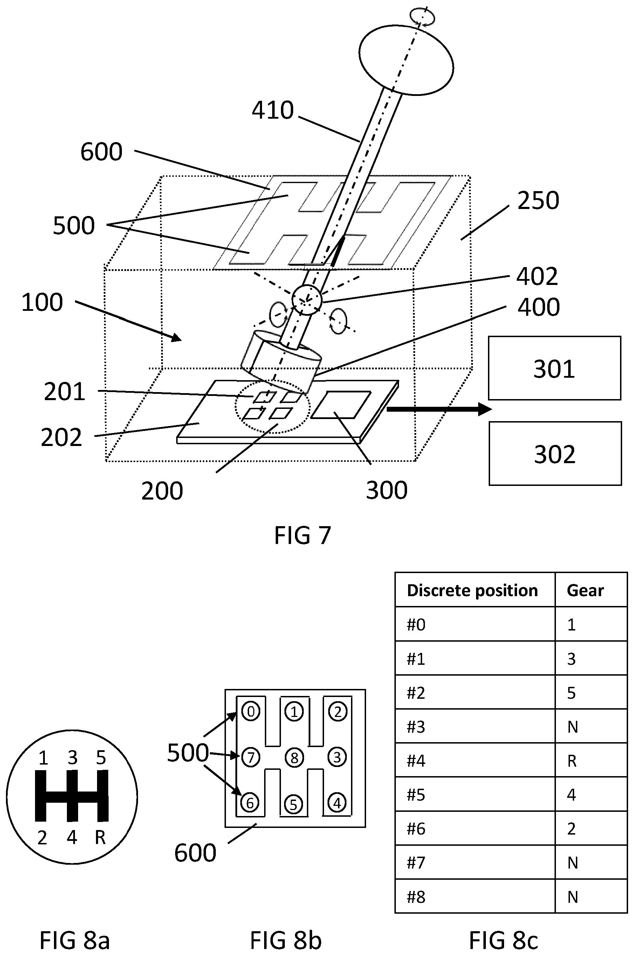

The predefined discrete positions can be defined according to a volume, to a plane (e.g. an area), or to a line being defined with respect to the stationary component. In some embodiment, the four magnetic sensors (200) are arranged on a plane (202) parallel to a reference plane (600) used for defining (some up to all) the predefined discrete positions (500) as exemplarily illustrated in FIG 8a, FIG 8b.

The magnetic sensors can be located around a sensing centre (204) (e.g. located on a virtual circle 203 around the centre) preferably being located in accordance with the pivoting point (402) of the mobile element (401), for example a control lever, and with the position of the magnetic sensor (400) on the control lever. Distances between the magnetic sensors notably depend on movement range of the magnetic source, and they can be typically in range from few millimetres up to centimetres.

The magnetic sensors (200) are connected to a processing unit (300) which receives the magnetic field component measurements from each sensor.

The sensors used for measurement can be arranged coplanarly such that any offset from the reference plane is negligible for the intended accuracy of position determination.

In embodiments, the processing unit (300) may be configured to provide an output (510) for providing the discrete position being assigned to the current position of the mobile element (e.g. magnetic source) to another unit of the system (301) and/or to an external device (302). Advantageously, the output (510) can be a reference, e.g. an (e.g. alphabetical, numerical, alphanumerical) index, preferably in digital form, indicating the discrete position being assigned to the current position of the mobile element (400). This enables efficient communication with other system components. Such another unit or external device may be any device within the same assembly or external systems that can receive the output data regarding the assigned discrete position or angles. Examples of "another unit of the system" include a control module for a vehicle's onboard computer, while examples of "an external device" include a user-interface console, diagnostic equipment, or a remote computing service.

The output may be any form of data signal (digital or analog) or communication message that indicates or represents which discrete position or gear the system has assigned to the magnetic source. It may also include the angular position of the magnetic source relative to the sensors, which allows further control, by twisting the control lever. Examples of this "output" include a digital code corresponding to a discrete position index or an electrical signal level read by a display module.

In embodiments, the processing unit (300) may be configured to assign a current position of the mobile element to one of a plurality of predefined discrete positions being indexed discrete positions. In some embodiment the predefined discrete positions (500) comprise a set of less than 100 discrete positions, each discrete position being different from the others, preferably less than 20 discrete positions.

In some embodiment, the trained machine learning model (310) can be designed and trained for a plurality of predefined discrete positions, being numerically in excess and/or different from (predefined) discrete positions being relevant for a specific applications, notably for sake of model training and/or design, robustness and/or accurate assignment. In such embodiments, the processing unit 300 of the magnetic sensor system (100) and/or the unit receiving the output of the processing unit (e.g. the other unit of the system (301), or the external device (302)) can be configured to map the assigned discrete position being provided by the trained learning model to one of another plurality of application-specific predefined discrete positions. As mentioned above, these predefined discrete position are positions of the mobile element with respect to the stationary component, each being defined and/or relevant for the specific application (cf. the particular examples of FIG 8a to FIG 8c, the present invention not being limited thereto), according to a predefined mapping. Preferably each application-specific predefined discrete position is a (digitally represented) indexed or indexable position. The number of the application-specific predefined discrete positions can be the same or lower than the number of the predefined discrete positions. The mapping between the predefined discrete positions and the application-specific discrete positions of the mobile element can be thus rely on a bijective or surjective function.

The proposed system allows for efficient position classification with manageable computational complexity as, contrary to known sensor systems for detecting a position of a mobile element such as a joystick, there is no need to firstly compute the angular position of the mobile element, notably by determining two angles with respect to the pivoting point, and (then) to determine the discrete position from the set of discrete positions, notably thanks to (e.g. mathematical and/or geometrical) rules or scores applied to mobile element's angular position with respect to a plurality up to each discrete positions of the set.

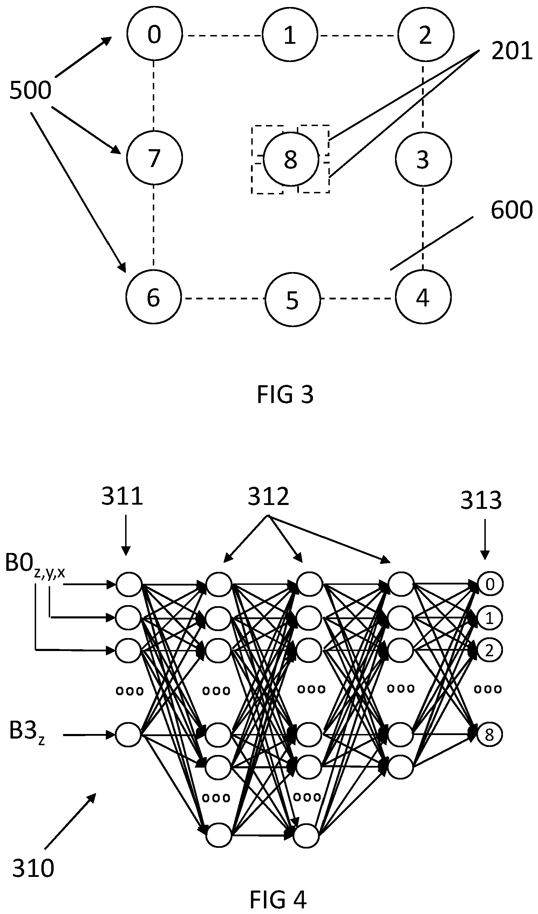

Moreover, the predefined discrete positions are higher in number than the magnetic sensors, or, in other words, the magnetic sensors are minor in number than the predefined discrete positions, so as the provided solution is not only more cost-efficient but also more compact, as these magnetic sensors can be easily arranged in an area from few square millimetres, rather than allocate one magnetic sensor to each discrete position so as to act as a proximity sensor. As illustrated by FIG 4, four magnetic sensors can be used, eventually integrated in the same integrated circuit (e.g. chip), in a system having 9 different discrete positions.

In embodiments, the predefined discrete position (500) may be indexed with respect to a reference plane (600), preferably wherein the magnetic sensors (200) lie on a plane substantially parallel to the reference plane (600). This provides a consistent spatial reference framework for position determination.

In embodiments, the reference plane (600) may be arranged so that it crosses the control level. This establishes optimal geometric relationships for sensing.

In embodiments, each of the indexed discrete positions (500) may be different from each other. This ensures unambiguous position detection.

As illustrated in FIG 3, the figure presents an exemplary set of discrete positions (500) for a mobile element (401), e.g. control lever, such as a gear lever for gear shifting notably having 4-5 forward gears plus a reverse gear (e.g. FIG 8a). The figure shows nine indexed discrete positions arranged in a pattern, mapped as shown in FIG 8b. The central position labeled as position 8 may represent a neutral position of the gear lever. Positions 0, 1, 2, 4, 5, and 6 correspond to different gear selections.

The discrete positions mapped in FIG 8b can be linked to the following positions in the figure of FIG 8a:
the discrete position 0 can represent a selection of the first gear,
the discrete position 1 can represent a selection of the third gear,
the discrete position 2 can represent a selection of the fifth gear,
the discrete position 4 can represent a selection of the reverse gear,
the discrete position 5 can represent a selection of the forth gear,
the discrete position 6 can represent a selection of the second gear,
while the discrete positions 3, 7 and 8 can represent a neutral (or transitional) position. In such embodiment, the trained machine learning model is trained to assign one of the discrete positions 0 to 8 to the current position of the mobile element (being a gear lever) while the processing unit being configured to map the assigned discrete position to one of the gears and neutral position, according to the specific application.

In some embodiments, each predefined discrete position (500) can correspond to a (one or multidimensional) range of specific arrangements of magnetic field components that can be detected by the plurality of magnetic sensors (200) and processed by the trained machine learning model in the processing unit (300). These predefined discrete positions can be seen as a set of spatial coordinates ranges or location indices selected before the system is in operation, each representing a distinct location the mobile element may occupy. Examples of "predefined discrete positions" include a set of positions spaced in a square (or other shapes, such as hexagonal) lattice in relation to a reference plane, gear-shift console positions, or labeled control positions in a user interface element (or simply user interface), labeled positions arranged in a grid, indexed positions associated with expected gear states in a vehicle, or any enumerated set of positions defined for a particular application.

In embodiments, the trained machine learning model may comprise a neuronal network having an input layer for acquiring numerical data corresponding to or representing the measured magnetic components provided by the plurality of magnetic sensors (200), preferably one or more hidden layers, and an output layer having nodes for indicating the discrete position being associated with the current position of the mobile element (401) based on magnetic components sensed by the magnetic sensors (200). This enables sophisticated pattern recognition for accurate position determination.

Examples of "neuronal network" include deep fully connected networks, convolutional neural networks (for certain specialized tasks), and feedforward networks designed for classification into distinct position classes.

Referring to FIG 4, the figure illustrates an embodiment of a model (310) such as a neural network implemented in the processing unit (300) as the trained machine learning model. The neural network (310) comprises an input layer with 12 input nodes (311), each collecting (a value representing) one of the three magnetic field components (Bx, By, Bz) detected by each of the four magnetic sensors (200), illustrated by the reference Biⱼ (wherein "i" indicates the magnetic sensor, "j" the sensed magnetic component). The network exemplarily includes three hidden layers (312) with multiple nodes for processing the input data. The output layer (313) includes 8 nodes, each corresponding to one of the predefined discrete positions (500) of the control lever. The neural network processes the magnetic field component measurements and assigns the current position of the magnetic source (400) to one of the predefined discrete positions (500), e.g. according to the output computed at each output node (313).

In embodiments, each node may be exclusively associated with one discrete position of the plurality of predefined discrete positions (500). This ensures clear one-to-one mapping between outputs and physical positions.

Thus, the output layer of the neural network dedicates a single node per (indexed) position and that each node's activation indicates the likelihood or selection of that specific position. Examples of this approach include a final softmax layer with separate outputs for each discrete position or separate binary outputs in a one-hot encoding scheme.

In embodiments, the mobile elements, notably joysticks and twistable control levers, are configured, or configurable, to provide activation of functions by twisting (i.e. rotating) and/or by moving (e.g. pushing) the mobile element along its longitudinal axis (404) as illustrated in FIG 1. In such embodiments, the magnetic sensor system (100) can be further configured to additional provide the angular position ("twist") and/or the axial position (407) of the mobile element (401) via determination of the angular position (409) and/or the axial position of the magnetic source (400) around/along the rotating axis (404) of the mobile element (401).

The processing unit (300) may thus be further configured to select one (201) of the plurality of magnetic sensors (200) based on the current position of the mobile element, and determine an angular position of the mobile element (for example of the magnetic source attached thereto) based on magnetic field components provided uniquely by said selected magnetic sensor. Preferably the processing unit (300) may be configured to select said magnetic sensor based on the discrete position (500) to which the current position of the mobile element has been assigned. This optimizes angular measurement accuracy by using the best-positioned sensor.

In fact, the inventor noticed that measured magnetic components provided by a single magnetic sensor, preferably the one located nearest to the magnetic source, can provide reliable and accurate angular and/or axial position (twist, push) determination of the magnetic source, notably by simply exploiting a relationship between these orthogonal magnetic components, notably between the horizontal components (Bx, By) for the angular position, e.g. the vertical component for the axial position.

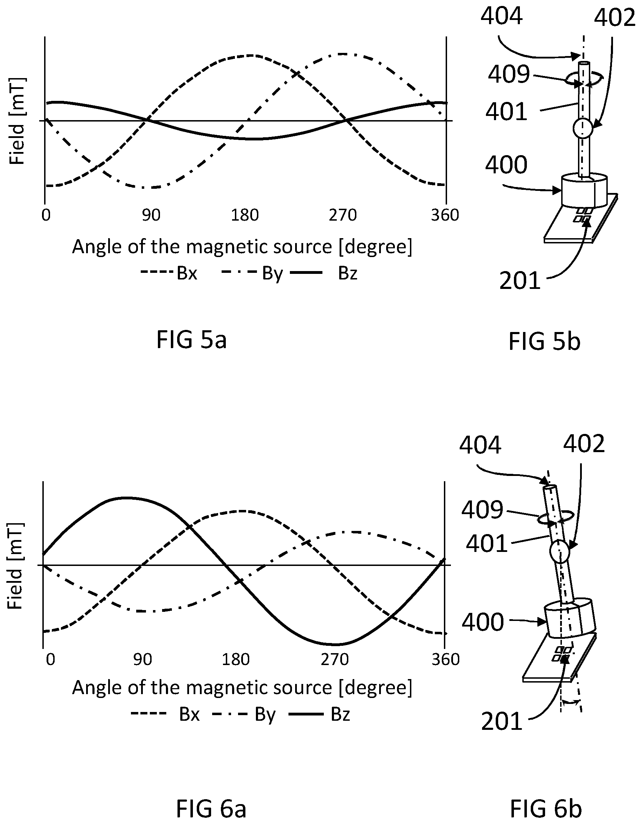

FIG 5 to FIG 6 exemplarily show the magnetic components (Bx, By, Bz) generated by a dual-pole magnet (400) at different sensor-source positions. The magnetic source comprises or consists of a single magnetic pole pair (i.e. a couple of alternated and/or opposed magnetically poles) located around the twist axis (404) of the mobile element, while the magnetic components are provided by a single magnetic sensor (201) of the plurality of sensors (200), such sensor being a 3D sensor (i.e. detecting three orthogonal components of the magnetic field).

In such exemplarily illustrations, the magnetic source (400) can be a cylindrical neodymium iron boron (NdFeb) magnet of 2.5 mm height, 5 mm diameter, and magnetisation of Br= 1.2T. The Figures display three signals corresponding to the three magnetic field components (Bx indicating a first horizontal magnetic component, By a second horizontal magnetic component oriented perpendicular to Bx, Bz a vertical oriented magnetic component being perpendicular to Bx and By) measured by the sensor as a function of the angular position of the magnetic source (400), notably while the mobile element (401) rotate around its longitudinal axis (404).

The FIG 5a and FIG 5b are related to an arrangement, where the magnetic source (400), being supported by the mobile element (401), is located vertically above the plurality of magnetic sensors, e.g. with an air gap of 2.5 mm. FIG 5a illustrates the sinusoidal-shaped signals representing the sensed magnetic components provided by a single sensor (201) while the mobile element (401) supporting the magnetic source (400) has been rotated one turn around its centre (i.e. from 0 up to 360 degree). In other words, these signals demonstrate how the magnetic field component measurements change with the rotation (shown as angular position (409)) of the magnetic source (400).

FIG 6a simulates the sensed magnetic components by the same sensor (201) in an arrangement wherein the same mobile element (401) supporting the magnetic source (400) has been firstly manipulated by the user causing an initially pivoting about some degree around the pivoting point (402), e.g. about 10 degree, the pivoting point being located e.g. 10 mm above the magnetic source, as graphically illustrated by FIG 6b. FIG 6a illustrates the sinusoidal-shaped signals representing the sensed magnetic components provided by the same single sensor (201) while the pivoted mobile element (401) has been then rotated one turn around its centre (i.e. from 0 up to 360 degree).

It is noted that these particular signals are obtained from a magnetic source being dipolar, with the axis of the mobile element passing through the center plane between the poles. The present invention is not limited to such orientation, and different orientations can be used. It is also not limited to a source with only one pole pair as shown in the figures. The discrete position assignment is analogous for different orientations and number of poles. The angular position detection for one pair of poles is unambiguous for one turn (360 degrees) around its center, while for multi-pole pairs the angular range (in which the position is unambiguously determined ) is reduced proportionally to the number of pairs. In general the range usable detection range is 360/M where M is the number of pole pairs.

The comparison of the three sensed magnetic component signals (Bx, By, Bz) between the two arrangements of FIG 5 and FIG 6 shows sensed magnetic components functions having the same sinusoidal shaped curve while affected by phase shifting and amplitude variations. Nevertheless, as the phase shifts of both the horizontal magnetic components (Bx, By) are reduced up to few degrees, the inventor noticed that (a relationship between) the horizontal magnetic component (Bx, By) can be used as basis for determining the angular position of the magnetic source, such as an inverse tangent trigonometric function (atan) applied to a ratio between the horizontal magnetic components (Bx, By). On the other part, the vertical component is significantly affected by the air gap between the magnetic sensor and the dual-pole magnet, air gap being modified by the pivoting angle of the mobile element around the pivoting point (402).

In case that a more accurate angular and/or axial positioning is needed, the calculation of the angular position (e.g. phase shift) can be corrected according to the current position of the magnetic source (of the mobile element, alternatively or complementarily), eventually according to the assigned discrete position assigned to the current position of the mobile element.

The arrangements of FIG 5 and FIG 6 depict an axial rotation of the magnetic source (400) attached to the mobile element (401), notably being a user interface (e.g. user-actuable control lever). The rotation occurs around the longitudinal axis of the user interface, also referred to as a "twist" motion. This twist motion changes the orientation of the magnetic field generated by the magnetic source (400), which is detected by the magnetic sensors (200). In addition or alternatively to a longitudinal (i.e. axial) movement of the user interface representing a "push" of the lever control, the twist of the user interface can be used to provide supplementary control function(s) in addition to the function(s) provided by assigning a predefined discrete position to the current position of the user interface. The processing unit (300) can thus determine the rotational position and/or the axial positioning of the user interface, i.e. of the magnetic source (400), based on the magnetic field components measured by a selected magnetic sensor (201) chosen from the plurality of magnetic sensors (200). The determination of this angular position utilizes a predetermined trigonometric functions or approximations thereof, rather than the neural network used to assign a discrete position.

A magnetic sensor can thus be selected, notably as soon as (e.g. in reaction of, after, under condition of) one of the plurality of predefined discrete positions has been assigned to the current position of the mobile element. In some embodiments, a magnetic sensor is selected as soon as a given subset of the plurality of predefined discrete positions has been assigned to the current position of the mobile element, the given subset including discrete positions providing accurate and/or robust determination of angular and/or axial position of the mobile element. The selection can be predefined or randomly executed.

However, in some embodiments, the assigned discrete position determine the choice of the sensor to measure the twist. In some embodiments, this choice may be done based on the sensor closest to the magnetic source, or the sensor with the highest signal (highest value), the sensor with the highest signal-to-noise ratio, for example.

The axial positioning of the user interface may include determining if the current axial positioning of the user interface is either in a rest positioning or away from such rest positioning ("push positioning"). The determination could rely on a predefined thresholding function, notably processing one or more magnetic component, rather than the neural network used to assign a discrete position, e.g. provided by the selected magnetic sensor.

In embodiments, the processing unit (300) may be configured to provide an output indicating the rotational and/or axial position of the mobile element, e.g. for the gear shift application for navigating the in-car entertainment device, radio, or selecting driving-mode, for example sport, eco-driving, disactivating driver-assistance. This enables multiple control functions from a single interface.

In embodiments, as shown in FIG 8, the magnetic sensor system (100) may further comprise a magnetic source (400) and a mobile element (401) such as a control lever, in particular a joystick, having a mobile extremity being moveable with respect to the plurality of magnetic sensors (200), the control lever being actuable. The magnetic source (400) and the sensors can move with respect to each other correspondingly with the motion of the mobile element, for example the magnetic source may be fixed on said mobile extremity (or, alternatively, on another mobile potion) of the control lever. This provides an intuitive physical interface for user interaction.

The magnetic sensor system (100) comprises a plurality of magnetic sensors (201), such as four 3D-sensors arranged coplanarly, positioned adjacent to the end of the joystick containing the magnetic source, opposite to the user-accessible end. A cylindrical magnet may serve as the magnetic source (400). The magnetic source may be any suitable source, such as a permanent magnet (Nd magnet, rare earth, SmCo, depending on the particular needs such as thermal stability, compactness or commercial availability), of any suitable shape (bars, spheres, discs, even compound sources with more than one magnet).

A processing unit (300) containing a trained neural network is incorporated for position detection. In the exemplarily embodiment of FIG 7, the predefined discrete position of the mobile element, i.e. of the gear lever (410) represent gear and neutral position selection as illustrated in FIG 8a to FIG 8c. In fact, the illustrated embodiment schematically represents a gear control system for a 5-gear plus reverse gear manually- or semi-automatically gear control (cf. FIG 8a). The predefined discrete positions represent thus predefined discrete positions of the control lever for manually or semi-automatically select one of the 5 gears and the reverse gear as schematically illustrated in FIG 8b. Additionally, the predefined discrete positions can comprise other discrete position e.g. for indicating a neutral position, such as the neutral resting position or one or more transitional positions as listed in the table of FIG 8c.

In some embodiments, such as the illustrated embodiment of FIG 7-8, the magnetic sensor system (100) may comprise an indexing mechanical arrangement configured to limit some movements and/or positions of the mobile extremity of the mobile element such as a control lever (410). This provides tactile feedback and prevents unintended positions. The arrangement may include a plate with guiding grooves, guiding rods, cogs and/or connected levers for constraining motion, etc.

In embodiments, the control lever (410) may comprise an actuation extremity for manual activation and a spherical joint for movable-mount the lever to a body on which magnetic sensors (200) are fixed. This allows smooth multi-directional movement while maintaining stability.

Each 3D sensor is configured to measure three orthogonal components (Bx, By, Bz) of the magnetic field generated by the source. The neural network can be implemented with 12 input nodes (three magnetic field components from each of the four sensors), three hidden layers, and outputs corresponding to the discrete positions (8-9 positions) as shown in FIG 4. The network is pre-trained to recognize patterns in the magnetic field measurements that corresponded to specific joystick positions.

The discrete positions may be classified in two subsets. Each of a first subset of the discrete positions (500) represents a distinct selected gear; and each of a second subset of the discrete positions (500) represents a neutral position.

For example, each of a first subset of the discrete positions (500) represents a distinct selectable gear, while each of a second subset of the discrete positions (500) represents a neutral position between gears, such as illustrated in FIG 8a to FIG 8c.

In this particular embodiment the processing unit (300) is configured to provide an output indicating the selected gear or the neutral position based on the predefined discrete position (500) to which the current position of the control lever has been assigned. In other words, the processing unit is configured to map the discrete output of the trained machine learning model to the application-specific predefined discrete position. This enables precise gear selection with clear position feedback.

In some embodiments, the determination of the angular (twist) and/or axial (push) position of the control lever is conditioned to the assignement of one of a subset of the plurality of predefined discrete positions, e.g. representing a selection of one of the forward and rear gears, alternatively or complementarily the neutral-rest (central) position.

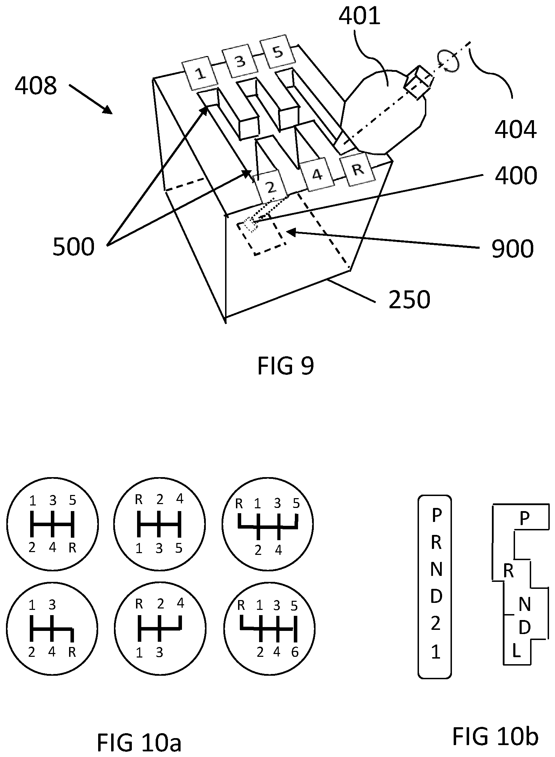

FIG 9 shows a prototype of a gearbox (408) configuration that comprises a training system (900) for training the machine learning model (310) of the magnetic sensor system (100) of the invention. In the illustrated embodiment, the training system (900) relies on the same magnetic sensing arrangement of the magnetic sensor system (100) and comprises a training module configured to acquire the magnetic components sensed by each of the magnetic sensors, as well as the predefined discrete position, the angular and/or axial position of the mobile element (401) being manually provided by the operator and/or automatically acquired by means of an external device providing angular and/or axial position references. The training system (900) can thus comprise the same processing unit (300) of the invention so as this gearbox configuration can be able to (selectively) operate as working prototype as well as training system for training the trained machine learning model (310).

In the illustrated embodiment, the magnetic sensor system (100) is configured with 9 discrete positions (500) according to the arrangement of FIG 8a to FIG 8c. The predefined discrete positions (500) of the gear lever include, firstly, positions for 5 forward speeds and 1 backward speed (discrete positions 0-2 and 4-6, cf. FIG 8b to FIG 8c). The predefined discrete positions include, secondly, two transient positions: one representing transitioning to and from the first or second gear, and the other representing transitioning to and from the 5^{th} or reverse gear (discrete positions 3 and 7, cf. FIG 8b to FIG 8c). The predefined discrete positions includes, thirdly, a neutral rest position of the gear lever (discrete position 8, cf. FIG 8b to FIG 8c). Depending on the application, the transitioning can be the indicated (outputted) to a connected (e.g. automotive) unit as a neutral gear position, as exemplarily illustrated in FIG 8c. In such arrangement, a gear changing from the 2^{nd} to the 3^{rd} gear should generate the following sequence of discrete position assignments: discrete position 6 -> discrete position 7 -> discrete position 8 -> discrete position 1. This sequence can be then outputted e.g. according to table of FIG 8c, i.e. as the following gear sequence: 2^{nd} gear-> neutral-> 3^{rd} gear.

The illustrated gearbox (408) can be used to train the trained machine learning model, e.g. by a supervised training process, wherein the gear lever will be positioned according to each of the predefined discrete position. In case of a gear lever with twist and/or push function, the supervised training process further involves a rotation and/or an axial movement of the gear lever (around/along the longitudinal axis 404 of the lever, eventually axial movements between a rest position to a predefined push position) at each of the predefined discrete positions (500) so as to train the model to correctly assign the current position of the gear lever (e.g. of the magnetic source) independently of the angular and/or axial position of the gear lever.

The arrangement of FIG 9 exemplarirly demonstrates how the indexing mechanical arrangement, e.g. the gear indexing, limits certain movements and positions of the mobile extremity of the control lever (410). The magnetic sensor system (100) determines which discrete position the control lever (401) occupies based on the magnetic field components measured by the plurality of magnetic sensors (200) and processed by the trained machine learning model.

In embodiments, the second subset (500) may comprise a rest position and/or a transitional position. This allows detection of intermediate states during operation.

This provides a comprehensive interface for automotive gear selection.

The present invention is not limited to these examples, and other arrangements of the sensors can be used. For exemple, other gear arrangement can be supported, such as manual-, semi-automatic- gear selectors as illustrated in FIG 10a, and/or automatically gear selectors as illustrated in FIG 10b.

Regarding the magnetic sensor system (100), for example, other numbers of sensors as well as other sensors arrangements can be used, such as six sensors in a planar, hexagonal arrangement, or three arranged triangularly, combined with a magnet arranged for asymmetric field detection; they may be arranged in different shapes such as a cross pattern or circular pattern (e.g. five sensors or more sensors, e.g. 8 sensors), etc. Even if not illustrated, the invention can be equally applied to embodiments where the plurality of magnetic sensors are located on the mobile element (401) (e.g. at an extremity or around a terminal portion of the mobile element) while the magnet source is located on the stationary component (250), (e.g. below the pivoting point of the mobile element and/or along the longitudinal axis (404) of the mobile element when the mobile element is in a rest position).

In a second aspect, the present invention relates to a method for detecting a position of the mobile element (401), notably a control lever, advantageously being actuable by a user (i.e. an user interface), with respect to the stationary portion (250), by means of the magnetic source (400) and the plurality of magnetic sensors (200), for example using a system of embodiments of the first aspect of the present invention.

The method comprises providing one of the magnetic source (400) and the plurality of magnetic sensors (200) to the mobile element, the other of the magnetic source (400) and the plurality of magnetic sensors (200) to the stationary component (250).

The method comprises measuring magnetic field components generated by the magnetic source (400) at a plurality of measurement positions, by means of the plurality of magnetic sensors, and assigning a current position of the mobile element (401) to one of a plurality of predefined positions, e.g. discrete positions (500) of the mobile element (401) by processing the measured magnetic field components using the trained machine learning model (310).

The input of each sensor of the plurality may be input of the machine learning model, and the output of the model may be the discrete position of the mobile element (e.g. lever), e.g. an indexed discrete position. In other words, determining the discrete position may be seen as the act of mapping, by the processing unit, an observed set of sensor measurements to a single discrete location label within a finite set of possible locations.

In embodiments, three linearly independent components of the magnetic field may be measured at each of the plurality of measurement positions. This provides complete three-dimensional field information for enhanced accuracy.

The processing unit performs an operation or set of operations to select one labeled or indexed location among a predetermined set of labeled locations that approximate or match the measured magnetic data. Examples include implementing a machine learning model such as a neural network that outputs a single index from among multiple possible indices.

As already described, in embodiments, each of the plurality of discrete positions (500) may be indexed, preferably according to a reference plane (600), preferably wherein the measurement positions are located on a plane substantially parallel to the reference plane (600). This establishes a consistent spatial reference framework. Examples of "indexed discrete positions" include positions labelled 1-6 for gears in a vehicle, positions labelled 'A,' 'B,' 'C,' or positions labelled with numerical IDs for reference during data processing.

In embodiments, the method may comprise selecting one of the plurality of measurement positions based on the current position of the mobile element (401). In some embodiments, the current position may be based on the predefined discrete position (500) to which the current position of the mobile element (401) has been assigned, the present invention not being limited thereto. Once the position is selected, the method may comprise determining a rotational position (twist) and/or an axial position (push) of the mobile element (401) based on magnetic field components measured at said selected position. This optimizes rotational measurements by selecting the most appropriate sensor.

In some embodiments, the determination of the angular and/or axial position of the mobile element is conditioned to the assignement of one of a subset of the plurality of predefined discrete positions, e.g. representing a selection of one of the forward and rear gears. The selection can be predefined or randomly executed.

As described, the trained machine learning model (310) is trained to assign one of the plurality of predefined discrete positions (500) to the current position of the mobile element based on the measured magnetic field components provided by the magnetic sensors. Thus, the trained machine learning model can have been-previouly- trained by:
- defining the plurality of predefined discrete positions of the mobile element;
- acquiring magnetic components sensed by the magnetic sensors of the system at each of the predefined discrete positions, preferably while varying the angular and/or axial positions of the mobile element (401) at each discrete position;
- training the machine learning model using these aquires magnetic components, preferably while providing the predefined discrete position as desired output value (supervised learning).

In some embodiments, the plurality of predefined discrete positions is numerically in excess and/or different from (predefined) discrete positions being relevant for a specific applications, notably for sake of model training and/or design, robustness and/or accurate assignment. Alternatively or complementarily, the trained learning model can be provided (e.g. trained) for a plurality of predefined general discrete positions that could support a large range of applications.

In such embodiments, the method can thus comprise a step of mapping the assigned discrete position being provided by the trained learning model to one of another plurality of application-specific predefined discrete positions (notably to an indexed position, e.g. a labelled position), each being defined and/or relevant for the specific application. This step can be preceded by a step of defining a plurality of predefined application-dependant discrete positions of the the mobile element with respect to the static component.

Examples of "assign a current position" include classifying measured data into one of e.g. 10 labelled positions for an automotive gear lever or 20 labelled positions for a mechanical control apparatus, or even more.

The method may comprise indicating a selected gear or a neutral position of the gear lever (410) based on the predefined discrete position (500) to which the current position of the magnetic source (400) has been assigned.

The experimental procedure can follow two primary steps. First, for position detection, magnetic field components (Bx1-4, By1-4, Bz1-4) are measured at the four sensor locations when the joystick was placed at various positions. These measurements are fed into the neural network to determine the discrete position among the predefined set. Second, for rotation detection, once the position is determined, the system selects the optimal sensor (e.g. the one closest to the magnetic source for the detected position). For example, the processing unit identifies which particular sensor from an available set is best suited to measure the angular position or rotational position when the source is near that sensor. It is noted that the selection is not limited to a discrete position of the magnetic source. Examples of "selecting one sensor" include turning on or giving priority to a certain Hall sensor in a multi-sensor circuit to measure higher signal fidelity when the magnet moves closer to that sensor's location.

The magnetic field components from this selected sensor can then be processed using a trigonometric function (arctan) to determine the rotation angle of the joystick. This is not the only option. For example, the processor may process this data using a Fourier transform analysis rather than simple trigonometric functions. The processing can include corrections to account for harmonic distortions in the rotating magnetic field.

To determine the angular position of the magnet source relative to the sensors, the rotational orientation or tilt of the magnetic source in at least one rotational degree of freedom is calculated or derived, based on a subset or all of the measured magnetic field components. Examples of "angular position" determination include computing the magnet's rotation about its central axis in a gear-shift knob or the pivot angle of a lever in a mechanical control.

In a third aspect, the present invention relates to a computer-readable medium storing instructions that, when executed by a processor, cause the processor to perform the method of any one of the embodiments of the second aspect. In particular, the medium may store a trained machine learning model, such as a neural network. When sensors of a system provide their measured values as input of the medium, the model provides an output of a position of the lever. The measurements may be triggered by the processor or an external signal, for example upon detection of a variation of a position. The sensing elements may be passively detecting the field and upon a sudden change, the neural network is fed with the inputs to detect the position of the lever. The medium may comprise an output for providing the position obtained by the model to a further unit. The medium may also comprise instructions to select a sensor of the plurality in accordance with the position previously obtained, and reading the sensor for obtaining a further parameter as described above, e.g. the angular position (or twist) of the lever.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

### List of Reference Numbers

(100) - magnetic sensor system
(200) - plurality of magnetic sensors
(201) - one of the plurality of magnetic sensors
(202) - stationary component; sensors plane
(203) - virtual circle
(204) - sensing centre
(250) - stationary component; gearbox casing
(300) - processing unit
(301) - another unit of the system
(302) - external device
(310) - trained machine learning model
(311) - input layer
(312) - internal (or hidden) layer
(313) - output (or outer) layer
(400) - magnetic source
(401) - mobile element; control lever
(402) - spherical joint
(403) - mobile extremity
(404) - longitudinal axis, twist axis
(405) - first rotational axis
(406) - second rotational axis
(407) - axial position
(408) - gearbox
(410) - gear lever
(500) - plurality of predefined discrete positions
(510) - output of assigned discrete position
(600) - reference plane
(900) - Training system

## Claims

1. A magnetic sensor system (100) for detecting a position of a mobile element (401), notably being an user interface element, being moveable relative to a stationary component (250), the system comprising:
- a plurality of magnetic sensors (200), each magnetic sensor (201) being configured to measure magnetic field components generated by a magnetic source (400); one of the magnetic source and the plurality of magnetic sensors being provided to the mobile element, the other one being provided to the stationary component;
- a processing unit (300) including a trained machine learning model (310), the processing unit being configured to assign a current relative position of the mobile element to one of a plurality of predefined discrete positions of the mobile element with respect to the static component based on the magnetic components (Bx, By, Bz) provided by the plurality of magnetic sensors.

2. The magnetic sensor system of the previous claim, wherein the processing unit is configured to assign the current relative position to one of a plurality of predefined discrete positions being indexed discrete positions; and/or the predefined discrete positions comprise a set of less than 100 discrete positions, preferably less than 20 discrete positions; and/or wherein the predefined discrete positions are higher in number than the magnetic sensors.

3. The magnetic sensor system of the previous claim, wherein the predefined discrete positions are indexed relative to a reference volume, plane or line (600) of the stationary component, preferably wherein the discrete positions are indexed relative to a reference plane further wherein the magnetic sensors lying on a plane substantially parallel to the reference plane.

4. The magnetic sensor system of any one of the previous claims, wherein the trained machine learning model (310) comprises a neuronal network having an input layer (311) for aquiring numerical data corresponding to or representing the measured magnetic components (Bx, By, Bz) provided by the plurality of the magnetic sensors, preferably one or more hidden layers (312), and an output layer (313) having nodes for indicating the discrete position being associated with the current position of the mobile element.

5. The magnetic sensory system of any one of the previous claims, wherein the processing unit is further configured to select one sensor (201) of the plurality of magnetic sensors (200) based on the current position of the mobile element, and determine an angular position (409) and/or an axial position (407) of the mobile element relative to the stationary component (250) based on magnetic field components provided uniquely by said selected magnetic sensor; preferably the processing unit being configured to select said the magnetic sensor based on the discrete position to which the current position of the mobile element has been assigned; preferably the processing unit being configured to determine the angular position of the magnetic source based on the current position and/or assigned predefined position of the mobile element.

6. The magnetic sensor system of any one of the previous claims, wherein the mobile element is a control lever having a mobile extremity (403) being moveable with respect to the stationary component, the control lever being actuable by a user and/or a mechanical device; and wherein the magnetic source or the plurality of magnetic sensors is fixed on said mobile extremity of the control lever.

7. The magnetic sensor system of the previous claim, comprising an indexing mechanical arrangement for a reference plane (600) configured to limit some movements and/or positions of the mobile extremity of the control lever with respect to the stationary component.

8. The magnetic sensor system of claim 6 or 7, wherein
the control lever is a gear lever (410) for a manual or semi-automatic transmission of a vehicle; and wherein
each of a first subset of the discrete positions represents a distinct selected gear; and wherein
each of a second subset of the discrete positions represents a neutral position between gears; and wherein the processing unit is configured to provide an output indicating the selected gear or the neutral position based on the predefined discrete position to which the current position of the gear lever has been assigned.

9. A method for detecting a position of a mobile element (401) being moveable with respect to a stationary component (250), the method comprising:
- providing one of a magnetic source (400) and a plurality of magnetic sensors (200) to the mobile element;
- providing the other of the magnetic source (400) and the plurality of magnetic sensors (200) to the stationary component;
- measuring magnetic field components (Bₓ, B_{y}, B_{z}) generated by the magnetic source at a plurality of measurement positions by means of the plurality of magnetic sensors;
- assigning a current position of the mobile element to one of a plurality of predefined discrete positions (500) of the the mobile element with respect to the static component by processing the measured magnetic field components using a trained machine learning model (310).

10. The method of the previous claim, wherein three linearly independent components (Bx, By, Bz) of the magnetic field are measured at each of the plurality of measurement positions, preferably by means of the same magnetic sensor.

11. The method of the claim 9 or 10, wherein each of the plurality of discrete positions is indexed; and/or wherein the predefined discrete positions comprise a set of less than 100 discrete positions, preferably less than 20 discrete positions; and/or wherein the predefined discrete positions are higher in number than the magnetic sensors.

12. The method of any one of the claims 9 to 11, comprising :
- selecting one of the plurality of measurement positions and/or one of the magnetic sensor (201) based on the current position of the mobile element, preferably based on the predefined discrete position to which the current position of the mobile element has been assigned, and
- determining a rotational position and/or an axial position of the mobile element based on magnetic field components measured at said selected position and/or provided by said selected magnetic sensor.

13. The method of any one of the claims 9 to 12, wherein the method for detecting position of a mobile element is a method for detecting position of a control lever, notably a gear lever, for operating a manual or semi-automatic transmission of a vehicle; and wherein each of a first subset of the discrete positions represents a distinct selectable gear, and wherein each of a second subset of the discrete positions represents a neutral position between gears; the method comprising:
- indicating a selected gear or a neutral position of the gear lever based on the predefined discrete position to which the current position of the control lever or gear lever has been assigned.

14. The method of any one of the claims 9 to 13, comprising
- defining a plurality of predefined application-dependant discrete positions of the mobile element with respect to the static component; and
- mapping the assigned discrete position to one of said plurality of predefined application-dependant discrete positions.

15. A computer-readable medium storing instructions that, when executed by a processor, cause the processor to perform the method of any one of the claims 9 to 14.
